# FASCICULE DE BREVET EUROPEEN

(11) **EP 4 121 668 B1**
(45) Date de publication et mention de la délivrance du brevet: **25.11.2026**
(21) Numéro de dépôt: 21712193.8
(22) Date de dépôt: 19.03.2021
(51) Int. Cl.: F16G 3/08, F16G 1/08

(54) **ARMATURE RAPPORTÉE POUR JONCTION DE BANDE TRANSPORTEUSE ET JONCTION ASSOCIÉE**
AUFSATZRAHMEN ZUM SPLEISSEN EINES FÖRDERGURTES UND ZUGEHÖRIGER SPLEISS
ADDED FRAME FOR SPLICING A CONVEYOR BELT AND ASSOCIATED SPLICE

(30) Priorité: 20.03.2020 FR 2002770
(43) Date de publication de la demande: 25.01.2023
(73) Titulaire: FP Business Invest, 42400 Saint-Chamond (FR)
(72) Inventeur: TAVERNIER, Bernard, 42500 Le Chambon Feugerolles (FR); GUILLEMET, Frédéric, 69300 Caluire et Cuire (FR)
(74) Mandataire: Bringer IP
(86) Numéro de dépôt international: PCT/EP2021/057163
(87) Numéro de publication internationale: WO 2021/186075

(56) Documents cités:
- EP-B1- 1 163 459
- WO-A1-2014/128042
- WO-A1-95/11393
- US-A1- 2004 195 079

## Description

### DOMAINE TECHNIQUE DE L'INVENTION

L'invention concerne, de façon générale, le domaine technique des jonctions de bandes transporteuses destinées à relier des extrémités d'au moins une bande transporteuse. Dans un but de simplification le terme de bande transporteuse aura, par convention dans la présente description, aussi bien le sens de bande transporteuse que celui de courroie.

L'invention se rapporte plus spécifiquement à une armature pour une jonction de bande transporteuse du type comportant un corps en matériau flexible à l'intérieur duquel est logé un renfort comprenant des câbles.

### ÉTAT DE LA TECHNIQUE ANTÉRIEURE

On connaît les bandes transporteuses, appelées également tapis transporteurs, utilisées pour transporter différents matériaux ou différents produits, tels que du charbon, des minerais, des produits industriels ou agricoles. Ces bandes transporteuses consistent en des bandes réalisées en un élastomère armé, ou en une matière de synthèse armée, d'une longueur et d'une largeur appropriées, dont les extrémités doivent être reliées entre elles, avant montage, ou après montage, sur des dispositifs de support et d'entraînement comportant des rouleaux de renvoi et des rouleaux fous. Souvent, ces dispositifs comportent également des organes tendeurs ayant pour but de bien tendre la bande transporteuse.

Ces bandes transporteuses sont utilisées notamment dans les mines, les carrières et d'autres endroits où elles sont soumises à des conditions de travail sévères et à des tensions internes élevées. En conséquence, de telles bandes transporteuses sont pourvues de renforts sous forme de fils ou de câbles, par exemple en acier, disposés dans le sens de la longueur de la bande transporteuse et noyés dans son corps réalisé généralement en matière élastomère ou de synthèse pour lui conférer la résistance nécessaire pour l'application particulière pour laquelle la bande a été prévue.

De nombreuses solutions existent pour effectuer cette liaison des extrémités des bandes transporteuses. À l'origine, et encore aujourd'hui, on utilise la vulcanisation lorsque la bande est constituée d'un élastomère vulcanisable armé. Après un travail de préparation destiné à créer, par exemple, dans chaque extrémité des profils complémentaires qui s'appliquent les uns sur les autres lorsque l'on rapproche lesdites extrémités, la vulcanisation est effectuée avec apport de chaleur et de pression, comme cela est bien connu. Une variante de la vulcanisation est le collage à froid.

Dans le cas d'une bande transporteuse armée de câbles, l'effet de vulcanisation ou thermosoudage par aboutement ne permet pas de fixer entre eux les deux brins du renfort câblé de chaque extrémité. Il en résulte une discontinuité au niveau de l'armature, au détriment de la tenue mécanique à la traction. Des solutions consistant en une répartition astucieuse des câbles et de leurs extrémités sur l'étendue longitudinale de la liaison sont également connues, de sorte par exemple que leurs discontinuités ne soient pas toutes alignées suivant un même axe transversal, ce qui fragiliserait localement et de façon substantielle la bande transporteuse au droit de la jonction. Une telle solution, aujourd'hui très répandue, nécessite de décortiquer intégralement des portions d'extrémités de tous les câbles de part et d'autre de la jonction à réaliser, sur une longueur relativement importante, puis de créer un enchevêtrement de ces portions d'extrémités de câbles sur une certaine longueur, tout en disposant leurs extrémités de manière décalée longitudinalement sur la largeur de la bande. De cette manière, deux extrémités de câbles adjacents ne se retrouvent pas alignées transversalement, à savoir dans le sens de la largeur. Une fois cette opération effectuée, les câbles doivent ensuite être noyés dans la matière constitutive du corps de la bande et une opération de vulcanisation est effectuée pour finaliser la jonction.

La mise en œuvre d'un tel procédé est particulièrement contraignante. Tout d'abord, la multiplicité des opérations nécessite une durée de maintenance très longue, supérieure à une journée, voire plusieurs jours. De plus, les conditions d'utilisation très sévères de la bande transporteuse exigent un travail soigneux lors de la réalisation des jonctions qui ne peut être fait que par des spécialistes très qualifiés. Compte tenu de la durée de maintenance, plusieurs équipes de personnes doivent se relayer, chacune de ces personnes devant être qualifiée. Par ailleurs, ces jonctions exigent que ce travail soit exécuté sur une longueur très importante, de plusieurs mètres de long, généralement entre 5 et 10 mètres. L'opération de vulcanisation devant être effectuée en une seule étape sur toute la longueur de la jonction, il est nécessaire de pouvoir disposer une presse à vulcaniser sur place, généralement sur le lieu où la jonction doit être réparée, et de l'adapter à la longueur de la jonction. Les temps d'exécution et les frais correspondants sont alors très importants.

D'autres solutions reliant les extrémités des câbles, par exemple au moyen d'épissures, sont également connues. Toutefois, là encore de telles solutions mobilisent des personnes qualifiées et nécessitent en général des opérations de dégarnissage des câbles au voisinage des portions d'extrémité de la bande transporteuse à relier ensemble, ce qui est très long à mettre en œuvre.

Un autre moyen de liaison connu consiste dans le fait d'utiliser des agrafes en forme générale de U, découpées dans du feuillard métallique, lesquelles agrafes comportent des plaques supérieures et des plaques inférieures reliées par des charnons, ces agrafes étant fixées en deux séries à cheval sur chacune des extrémités de bande transporteuse à relier, de telle sorte que les charnons dépassent et que ceux d'une série puissent être imbriqués entre les charnons de l'autre série, une tige de liaison et d'articulation étant ensuite passée à l'intérieur des charnons imbriqués de manière à relier ainsi les deux extrémités en formant une sorte de charnière. Les moyens connus utilisés pour fixer les agrafes sur les extrémités de bande transporteuse consistent en des moyens de fixation à tige tels que des crampons, des rivets et/ou des vis. Ces tiges présentent l'avantage de pouvoir traverser les câbles noyés dans la bande transporteuse, et donc dans les portions d'extrémités à relier ensemble. Toutefois, l'expérience a montré que cette solution n'était pas toujours satisfaisante en termes de résistance à la traction dans la mesure où le câble subissait alors un effet de détoronnage important. Pour minimiser cet effet de détoronnage, il est généralement utilisé des agrafes recouvrant les portions des extrémités de la bande transporteuse sur une plus grande longueur, de sorte à pouvoir répartir les moyens de fixation à tiges sur une plus grande longueur de câbles, une telle caractéristique étant particulièrement contraignante car elle est préjudiciable à la souplesse de la jonction lorsque celle-ci passe sur les rouleaux de renvoi.

Beaucoup d'autres solutions ont été développées pour tenter de toujours plus améliorer la résistance à la traction et la souplesse de la jonction, ainsi que réduire le temps de maintenance nécessaire durant lequel la bande transporteuse doit rester à l'arrêt. On peut citer par exemple des solutions plus récentes, proposant des dispositifs de jonction faisant appel à des éléments de liaison plats généralement en élastomère armé ou en matière de synthèse armée, disposés respectivement à cheval sur un côté et sur l'autre côté des extrémités de la bande transporteuse et fixés sur lesdites extrémités qu'il s'agit de relier. Des exemples de tels dispositifs de jonction sont donnés dans les brevets EP-0827575-B1 et EP-1163459-B1. Ces dispositifs comportent une plaque supérieure et une plaque inférieure, éventuellement reliées par une partie centrale. Ces plaques inférieure et supérieure présentent un écartement adapté pour y engager l'extrémité respective d'une bande transporteuse. En d'autres termes, ces dispositifs de jonction comportent deux paires d'ailes de fixation en vis-à-vis, les extrémités de la bande transporteuse étant introduites respectivement entre deux ailes d'une même paire.

La fixation des parties inférieure et supérieure, formant des plaques de jonction sur les extrémités de la bande transporteuse, s'effectue généralement à l'aide de moyens de fixation à tige tels que de rivets, des pointes, des crampons, des systèmes vis-écrous, ou encore par collage à froid ou par vulcanisation à plat des ailes contre les surfaces plates extérieures de la bande transporteuse engagée entre les ailes. Ces dispositifs de jonction sont réalisés en une matière souple et élastique, par exemple en caoutchouc vulcanisé, ou en une matière de synthèse telle que du polyuréthane et ils comportent généralement une armature incorporée.

De telles solutions sont utilisées efficacement s'agissant de bandes transporteuses renforcées par un tissu. Toutefois, dans le cas de renforts à câbles, la problématique des moyens de fixation à tige traversant les câbles est toujours présente: la multiplication des moyens de fixation à tige pour minimiser les détériorations locales des câbles entraîne une rigidification de la jonction contraire à la souplesse recherchée pour passer sur les rouleaux de renvoi.

Il existe donc un besoin important, pour un homme du métier, de parvenir à une solution plus efficace que celles proposées par l'art antérieur pour parvenir à une jonction de deux extrémités d'une bande transporteuse du type comportant un corps en matériau flexible à l'intérieur duquel est logé un renfort comprenant des câbles.

WO 2014/128042 A1 divulgue certaines caractéristiques des revendications 1 et 11.

### EXPOSE DE L'INVENTION

L'objet de la présente invention est de proposer une solution qui corresponde à une évolution des jonctions existantes pour des bandes transporteuses renforcées par des câbles, et qui réponde à tout ou partie des problèmes exposés ci-avant.

Un but de l'invention est notamment de proposer une solution garantissant une tenue structurelle améliorée de la jonction d'une telle bande transporteuse pour résister aux efforts de traction importants, en particulier pour un usage destiné au transport de différents matériaux tels que du charbon ou des minerais, tout en offrant une souplesse nécessaire au passage des rouleaux de renvoi.

Un objectif recherché est également une réduction des coûts, d'une part en proposant une solution avec un prix de revient, à la fabrication, au stockage et à la distribution peu onéreux, et facile à mettre en œuvre pour ne pas nécessiter de main d'œuvre qualifiée et réduire le temps de maintenance, réduisant d'autant les coûts de maintenance et le temps d'arrêt de la bande transporteuse, ceci bien entendu sans nuire en aucune manière à la qualité du produit obtenu, c'est-à-dire en conservant, voire en améliorant, la qualité et la résistance de la jonction.

À cet effet, l'invention concerne une armature de jonction destinée à être rapportée sur au moins une première portion d'extrémité d'une bande transporteuse du type comportant un corps en matériau flexible à l'intérieur duquel est logé un renfort comprenant des câbles, l'armature étant remarquable en ce qu'elle comprend des éléments de retenue présentant au moins un corps configuré pour s'étendre au moins en partie transversalement par rapport à la bande transporteuse et des organes d'ancrage configurés pour venir en prise avec une partie au moins des câbles de manière à fixer le corps des éléments de retenue à la première portion d'extrémité de la bande transporteuse, les éléments de retenue comportant une interface de rétention pour retenir des moyens de fixation d'un dispositif de jonction destiné à relier la première portion d'extrémité à une deuxième portion d'extrémité de la bande transporteuse lorsqu'un effort de traction est réalisé entre le dispositif de jonction et la bande transporteuse.

Une armature comportant une telle combinaison de caractéristiques est particulièrement avantageuse en ce qu'elle forme une structure de retenue des moyens de fixation d'un dispositif de jonction permettant de reprendre les efforts de traction qui traversent la jonction. Par ailleurs, un moyen de fixation d'un dispositif de jonction peut exercer ses efforts sur un élément de retenue, lui-même solidarisé avec des organes d'ancrage, au moins deux, venant en prise sur deux câbles distincts, de préférence adjacents, espacés transversalement. Dans ces conditions, l'effort de traction subit par chaque moyen d'ancrage est divisé au moins par deux par rapport à l'effort de traction subit par le moyen de fixation du dispositif de jonction et cet effort de traction d'un moyen d'ancrage peut être repris par deux câbles au moins. L'armature forme ainsi un moyen de répartition de l'effort de traction subit par les moyens d'ancrage qui permet de réduire l'effet de détoronnage des câbles par rapport à l'art antérieur.

Par ailleurs, étant donné que les organes d'ancrage ne traversent pas la jonction de la bande transporteuse dans toute son épaisseur, mais seulement sur une épaisseur correspondant à l'épaisseur de portion d'extrémité obtenue après une opération de décorticage, la souplesse de la jonction n'est pas impactée de manière substantielle.

Enfin, une telle armature permet d'abouter directement, voire indirectement si un espace longitudinal est formé entre les deux extrémités de la bande transporteuse, les extrémités des câbles logées dans chacune des portions sensiblement alignées transversalement. Une telle jonction est plus facile à mettre en œuvre et permet de réduire substantiellement la longueur de la jonction.

L'interface de rétention des éléments de retenus permet de retenir des moyens de fixation d'un dispositif de jonction destiné à relier la première portion d'extrémité à une deuxième portion d'extrémité de la bande transporteuse dans une position de jonction où les première et deuxième portions d'extrémités sont disposées entre deux plaques de jonction du dispositif de jonction fixées ensemble par lesdits moyens de fixation. Dans une telle configuration, l'armature rapportée sur au moins la première portion d'extrémité de la bande transporteuse est distincte du dispositif de jonction. En particulier, les organes d'ancrage sont distincts des moyens de fixation utilisés pour fixer le dispositif de jonction, ce dispositif de jonction étant du type comprenant au moins deux plaques de jonction recouvrant chacune un côté distinct des première et deuxième portions d'extrémités de la bande transporteuse de sorte que les première et deuxième portions d'extrémités de ladite bande transporteuse soient disposées entre les deux plaques de jonction, les plaques de jonction étant fixées ensemble par des moyens de fixation. De cette manière, l'interface ou les interfaces de rétention assure(nt) une fonction de retenue des moyens de fixation du dispositif de jonction, lorsqu'un effort de traction est réalisé entre le dispositif de jonction et la bande transporteuse. L'armature rapportée assure donc une fonction de renforcement d'au moins la première portion d'extrémité de la bande transporteuse afin de retenir le dispositif de jonction lorsqu'il est soumis aux efforts de tractions.

De préférence, les organes d'ancrage comprennent chacun une tige configurée pour traverser la première portion d'extrémité. Ces tiges peuvent être des pattes d'ancrage de crampons formant élément de retenue, ou par exemple une tige d'une vis formant élément de retenue.

De préférence, l'armature présente une structure rigide. Une telle structure permet un meilleur maintien qu'une structure souple comme un câble.

De préférence, les organes d'ancrage et/ou le corps des éléments de retenue sont métalliques.

Suivant un mode de réalisation, l'interface de rétention de certains au moins des éléments de retenue est supportée par le corps de ces dits éléments de retenue. Cela permet de simplifier la structure de l'armature. Dans une configuration avantageuse, l'interface de rétention présente une surface concave formant une concavité orientée ou ouverte longitudinalement de sorte à recevoir en appui l'un au moins des moyens de fixation. Cet appui forme un berceau de réception pour un moyen de fixation permettant une répartition uniforme des efforts repris sur les câbles dans lesquels les organes d'ancrage associés sont en prise.

Suivant un mode de réalisation, au moins plusieurs des éléments de retenue sont solidarisés ensemble suivant un axe destiné à s'étendre transversalement par rapport à la bande transporteuse. Une telle caractéristique facilite la pose des éléments de retenue par les opérateurs. En effet, cela permet de solidariser plusieurs éléments de retenue en même temps. En outre, une solidarisation dans le sens transversal de la bande transporteuse permet de ne pas nuire à la souplesse de la bande.

Suivant un mode de réalisation, l'armature comprend au moins une plaque de support configurée pour recouvrir une partie au moins d'un même côté de la première portion d'extrémité et de la deuxième portion d'extrémité de la bande transporteuse, la plaque de support comportant au moins une partie de plusieurs des d'éléments de retenue répartis suivant un motif prédéterminé, par exemple en quinconce. De préférence, le motif sera choisi pour garantir une répartition homogène des efforts de traction sur l'étendue des portions d'extrémités des câbles. Une telle plaque de support vise à solidariser ou lier ensemble une partie au moins des éléments de retenue aussi dans le sens longitudinal de la bande transporteuse, ceci sans nuire à la souplesse. De cette manière, par l'utilisation d'une telle plaque de support, de préférence dans le même matériau flexible que celui du corps de la bande transporteuse, il est possible de solidariser en une seule opération plusieurs éléments de retenue qui sont prépositionnés sur ladite plaque de support de sorte à venir à leur place correspondante sur la portion d'extrémité associée.

Suivant un mode de réalisation, la distance séparant deux organes d'ancrage d'un élément de retenue correspond à une distance séparant deux câbles de la première portion d'extrémité de la bande transporteuse. De cette manière les éléments de retenue sont solidaires de deux câbles distincts adjacents. De façon plus générale, on pourra choisir une distance séparant deux organes d'ancrage d'un élément de retenue est configurée pour correspondre sensiblement à un multiple de de la distance séparant deux câbles de la première portion d'extrémité de la bande transporteuse.

Suivant un mode de réalisation, certains au moins des organes d'ancrage d'au moins certains des éléments de retenue comprennent des crampons, présentant des pattes d'ancrage situées dans le prolongement du corps de l'élément de retenue associé, chaque crampon étant de préférence formé d'un seul tenant.

Suivant un mode de réalisation, le corps des éléments de retenue comprend une pièce supérieure et/ou une pièce inférieure reliées ensemble par les organes d'ancrage, les pièces inférieure et/ou supérieure du corps des éléments de retenue étant destinées à venir d'un côté ou de l'autre de la première portion d'extrémité de la bande transporteuse, suivant son épaisseur. Une telle configuration permet en outre un serrage sur la portion d'extrémité correspondante de la bande transporteuse avec une pression répartie sur une surface plus large. Une telle pression permet de réduire la transmission des efforts par l'organe d'ancrage dans le câble étant donné qui les efforts de traction sont alors repris à la fois par le câble retenant l'organe d'ancrage et par la matière de la portion d'extrémité serrée entre la pièce supérieure et la pièce inférieure de l'élément de retenue.

Suivant un mode de réalisation, une première des deux pièces constituées par la pièce supérieure et la pièce inférieure du corps de l'élément de retenue comporte au moins une cuvette, telle qu'une fraisure, apte à loger une tête de l'un des organes d'ancrage, et en ce que la deuxième des deux pièces comporte au moins une interface d'ancrage, telle qu'un taraudage, avec laquelle est apte à coopérer un tronçon d'ancrage dudit organe d'ancrage.

Suivant un mode de réalisation, une première pièce parmi la pièce supérieure ou la pièce inférieure comporte au moins une empreinte apte à loger une partie au moins d'une tête ou partie transversale centrale d'une tige d'un organe d'ancrage, tel qu'un crampon. Suivant un mode de réalisation complémentaire ou alternatif, une deuxième pièce parmi la pièce supérieure ou la pièce inférieure comporte au moins une empreinte apte à loger une partie au moins des extrémités des organes d'ancrage, de préférence recourbées sous la pièce.

Selon un second aspect, l'invention concerne également une jonction de bande transporteuse s'étendant suivant un axe longitudinal comprenant un corps en matériau flexible à l'intérieur duquel est logé un renfort comprenant des câbles s'étendant au moins en partie axialement, la bande transporteuse comportant une première et une deuxième portions d'extrémités reliées ensemble par un dispositif de jonction comprenant au moins deux plaques de jonction recouvrant chacune un côté distinct des première et deuxième portions d'extrémités de la bande transporteuse de sorte que les première et deuxième portions d'extrémités de ladite bande transporteuse soient disposées entre les deux plaques de jonction, les plaques de jonction étant fixées ensemble par des moyens de fixation, la jonction étant remarquable en ce qu'elle comprend au moins une armature de jonction telle que décrite ci-avant rapportée sur la première portion d'extrémité et la deuxième portion d'extrémité, et configurée pour retenir les moyens de fixation du dispositif de jonction lorsqu'un effort de traction est réalisé entre le dispositif de jonction et la bande transporteuse.

Selon un autre aspect, l'invention concerne également un procédé de fabrication d'une jonction de bande transporteuse telle que décrite ci-avant, remarquable en ce qu'il comporte au moins les étapes suivantes :
- décorticage d'une partie supérieure et d'une partie inférieure du corps de la bande transporteuse au niveau de la première portion d'extrémité et de la deuxième portion d'extrémité de la bande transporteuse ;
- mise en place d'au moins une armature de jonction rapportée sur la première portion d'extrémité et la deuxième portion d'extrémité de la bande transporteuse ;
- mise en place du dispositif de jonction de sorte à joindre les première et deuxième portions d'extrémités de la bande transporteuse.

Un tel procédé est particulièrement avantageux en ce qu'il est facile à mettre en œuvre par une personne, sans nécessiter de qualification particulière.

Selon un mode de réalisation, l'étape de décorticage d'une partie supérieure et d'une partie inférieure du corps de la bande transporteuse au niveau de la première portion d'extrémité et de la deuxième portion d'extrémité de la bande transporteuse correspond en une opération de retrait de matière dans le corps en matériau flexible de la portion d'extrémité correspondante, cette matière étant localisée sur une couche ou nappe périphérique extérieure et intérieure de la portion d'extrémité associée, entourant une nappe centrale à l'intérieure de laquelle sont situés les renforts tels que les câbles. La nappe centrale n'est alors pas décortiquée durant cette étape puisque le procédé ne nécessite pas de retirer toute la matière autour des câbles de la portion d'extrémité, ce qui est un gain de temps considérable, réduisant d'autant les coûts de maintenance et le temps d'arrêt de la bande transporteuse.

### BRÈVE DESCRIPTION DES FIGURES

D'autres caractéristiques et avantages de l'invention ressortiront à la lecture de la description qui suit, en référence aux figures annexées, qui illustrent :
[Fig. 1A] : une vue éclatée d'une jonction d'une bande transporteuse selon un premier mode de réalisation ;
[Fig. 1B] : une vue en perspective de dessus de la jonction assemblée selon ce premier mode de réalisation ;
[Fig. 2] : une vue d'une première portion d'extrémité et d'une deuxième portion d'extrémité de la bande transporteuse munies chacune d'une armature selon ce premier mode de réalisation ;
[Fig. 3] : une vue en perspective de dessus de la jonction assemblée selon un deuxième mode de réalisation ;
[Fig. 4A] : un détail de la figure 3 ;
[Fig. 4B] : une vue partielle en perspective détaillée et de dessus de la jonction assemblée selon un troisième mode de réalisation ;
[Fig. 5] : une vue détaillée en perspective de dessous de la jonction assemblée selon ce troisième mode de réalisation ;
[Fig. 6A] : une vue en coupe locale d'un appui d'un moyen de fixation contre un élément de retenue selon un quatrième mode de réalisation ;
[Fig. 6B] : une vue en perspective de dessus de la vue en coupe de la figure 6A ;
[Fig. 6C] : une vue en perspective de dessous de la vue en coupe de la figure 6A ;
[Fig. 7] : une vue en perspective de dessus d'une coupe locale d'un appui d'un moyen de fixation contre un élément de retenue selon un cinquième mode de réalisation ;
[Fig. 8] : une vue d'une armature pour une jonction selon un sixième mode de réalisation ;
[Fig. 9] : un détail d'une jonction comportant l'armature selon ce sixième mode de réalisation ;
[Fig. 10] : une vue en perspective de dessus de la jonction assemblée selon ce sixième mode de réalisation ;
[Fig. 11] : une vue en perspective de dessus d'une jonction assemblée selon un septième mode de réalisation ;
[Fig. 12] : une vue d'une plaque de support pour une jonction selon un huitième mode de réalisation ;
[Fig. 13] : une vue d'une jonction d'une bande transporteuse selon ce huitième mode de réalisation ;
[Fig. 14] : une vue d'une plaque de support pour une jonction selon un neuvième mode de réalisation.

Pour plus de clarté, les éléments identiques ou similaires sont repérés par des signes de référence identiques sur l'ensemble des figures.

Dans la description et les revendications, pour clarifier la description et les revendications, on adoptera à titre non limitatif la terminologie longitudinal, transversal et vertical en référence au trièdre **X, Y, Z** indiqué aux figures.

### DESCRIPTION DÉTAILLÉE D'UN MODE DE RÉALISATION

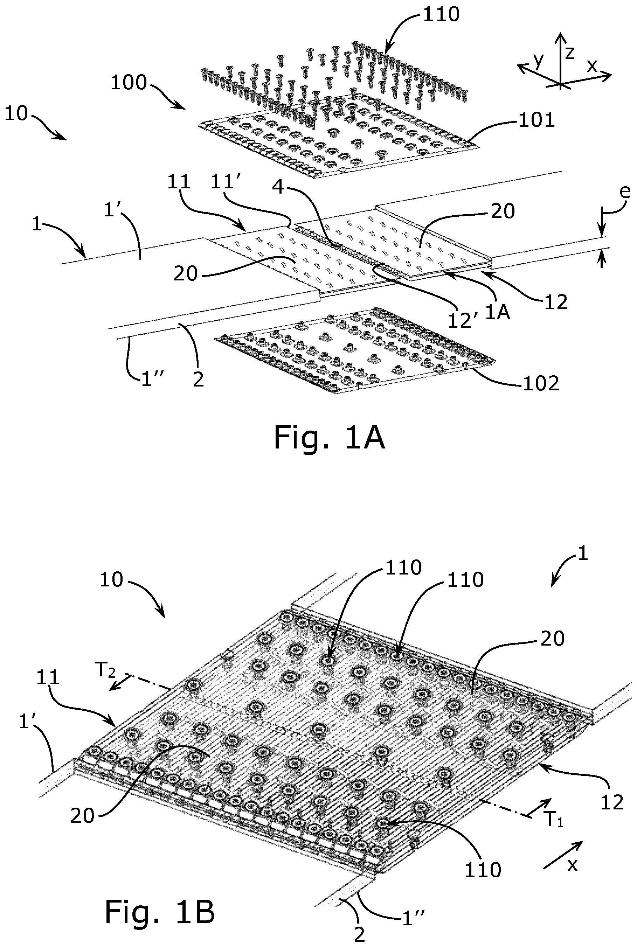

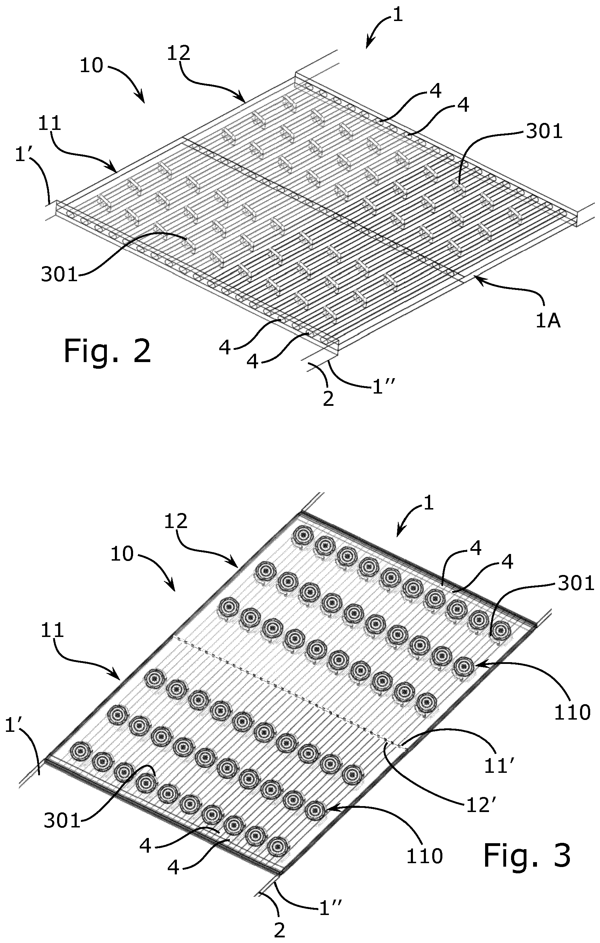

Les figures 1A, 1B et 2 illustrent une jonction **10** d'une bande transporteuse **1** selon un premier mode de réalisation. La bande transporteuse **1** s'étend suivant un axe longitudinal **X** correspondant globalement à sa direction de déplacement le long d'un convoyeur. La bande transporteuse **1** comprend un corps **2** formé d'un matériau flexible tel qu'un élastomère vulcanisable, ou une matière de synthèse, armé d'un renfort **3** comprenant des câbles **4** noyés dans le corps **2.** Les efforts repris par la bande transporteuse **1** sont principalement longitudinaux de sorte que les câbles **4** sont agencés dans le corps **2** de la bande transporteuse **1** en s'étendant axialement et qu'ils travaillent en traction durant l'utilisation de ladite bande transporteuse **1.**

La bande transporteuse **1** comporte un premier bord d'extrémité **11'** et un deuxième bord d'extrémité **12',** à partir desquels s'étendent sur la bande transporteuse **1** une première portion d'extrémité **11** et une deuxième portion d'extrémité **12** reliées ensemble par un dispositif de jonction **100** assurant la jonction **10** des deux portions d'extrémités **11, 12.** On notera en pratique que, compte tenu des distances pour convoyer les différents matériaux ou différents produits selon les usages dans des carrières ou autres lieux d'utilisation, une même bande transporteuse **1** peut être formée par la jonction de plusieurs portions longitudinales de bande transporteuse reliées ensemble par un dispositif de jonction **100.**

Les portions d'extrémités **11, 12** sont configurées de sorte qu'en position jointes, la jonction **10** au niveau du dispositif de jonction **100** est d'épaisseur égale à celle de la bande transporteuse **1.** De cette manière, l'utilisation du dispositif de jonction **100** ne crée pas localement une surépaisseur au niveau de ses portions d'extrémités **11, 12,** l'épaisseur étant constante. Une telle caractéristique est particulièrement importante pour éviter toute usure prématurée due au passage de racleurs sur le convoyeur. Pour satisfaire cette contrainte, la première portion d'extrémité **11** et la deuxième portion d'extrémité **12** sont amincies, en particulier après avoir été décortiquées par une opération de décorticage, pour garantir la mise en place du dispositif de jonction **100.** Ce décorticage s'étend de préférence dans l'épaisseur jusqu'aux câbles **4,** c'est-à-dire jusqu'à une épaisseur correspondant à l'épaisseur des câbles **4.**

La bande transporteuse **1** loge dans son corps **2** les câbles **4** de renfort. La bande transporteuse **1** est structurée de sorte à comprendre, dans le sens de son épaisseur **e,** une nappe sensiblement centrale **1A** qui intègre les câbles **4,** intercalée verticalement entre deux nappes extérieures de matière flexible du corps **2** dépourvues de renfort **3,** à savoir : une partie supérieure et une partie inférieure du corps **2** de la bande transporteuse **1.**

Chacun des câbles **4** de la bande transporteuse **1** s'étend longitudinalement dans le corps **2** de la bande transporteuse **1** continûment jusque dans la portion d'extrémité correspondante où est située l'extrémité lâche et sectionnée de chaque câble **4.** Les portions d'extrémités **11, 12** sont formés, dans le prolongement longitudinal de la bande transporteuse, de la nappe centrale **1A** intégrant les câbles et dégarnie ou décortiquée des nappes extérieures, à savoir décortiquée des couches de matière inférieure et supérieure situées normalement, sur le reste de la bande transporteuse hors de la jonction **10,** de part et d'autre de la nappe centrale **1A.** L'épaisseur des portions d'extrémités **11, 12** correspond à l'épaisseur de la nappe centrale **1A** obtenue après l'opération de décorticage, et de préférence égale à un diamètre moyen des câbles **4** ou au diamètre du câble **4** de plus grande dimension. Un dégarnissage parfait de chaque câble correspondant au retrait complet de toute la matière du corps **2** entourant les câbles **4,** et en particulier la matière du corps **2** entre les câbles **4,** n'est donc pas nécessaire.

Le dispositif de jonction **100** assurant la jonction des deux portions d'extrémité **11, 12** comprend ici deux plaques de jonction **101, 102** dimensionnées chacune pour recouvrir, sur toute ou partie de la largeur de la bande transporteuse **1** et de préférence sur toute la largeur, la première portion d'extrémité **11** et la deuxième portion d'extrémité **12** d'un même côté de la bande transporteuse **1.** Les plaques de jonction **101, 102** comportent une plaque de jonction inférieure **101** se situant à cheval sous les première et deuxième portions d'extrémité **11, 12** et une plaque de jonction supérieure **102** positionnée à cheval sur les première et deuxième portions d'extrémité **11, 12** de sorte à les recouvrir. Ces plaques de jonction **101, 102** présentent chacune une épaisseur complémentaire de celle de la portion d'extrémité correspondante configurée pour combler ensemble le retrait de matière effectué lors de l'étape de décorticage visant à obtenir l'amincissement de la première portion d'extrémité **11** et de la deuxième portion d'extrémité **12.** De cette manière, après jonction, on obtient un affleurement de la jonction **10** avec des surfaces inférieure **1"** et supérieure **1'** de la bande transporteuse **1,** c'est-à-dire une épaisseur **e** constante de la bande transporteuse **1,** sans relief. Comme déjà évoqué ci-avant, une telle caractéristique permet d'éviter toute usure prématurée du fait de l'usage de racleurs (non illustrés) se trouvant sur le parcours des matériaux convoyés et configurés pour racler la surface supérieure **1'** de la bande transporteuse **1.**

Les première et deuxième portions d'extrémités **11, 12** de ladite bande transporteuse **1** sont prises entre ou enserrées entre, verticalement, les deux plaques de jonction **101, 102** qui créent chacune un pont de matière entre les première et deuxième extrémités **11, 12.** Ces plaques de jonction **101, 102** sont réalisées en une matière souple et élastique, par exemple en caoutchouc vulcanisé, ou en une matière de synthèse telle que du polyuréthane et peuvent comporter une armature incorporée, par exemple une armature textile. Il s'agit de préférence de la même matière souple que celle constituant le corps **2** de la bande transporteuse **1.**

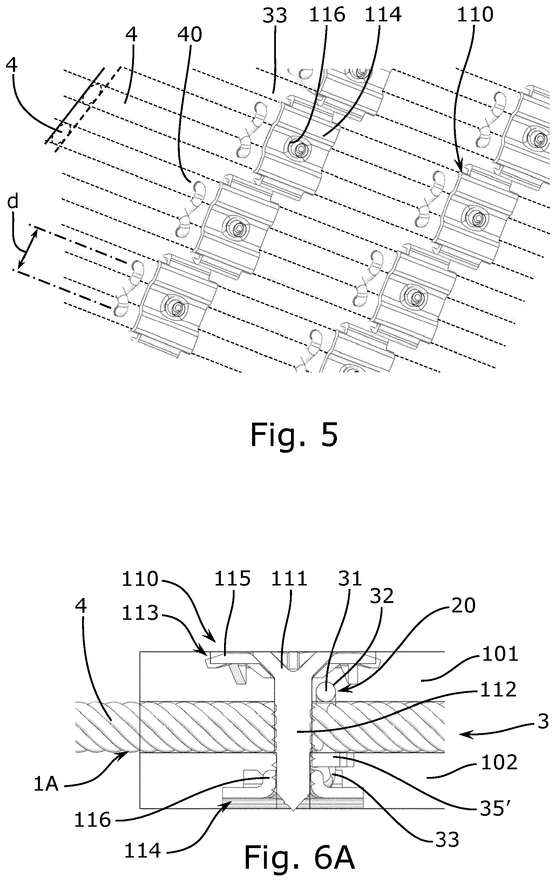

La fixation des plaques de jonction, inférieure **101** et supérieure **102,** s'effectue par des moyens de fixation **110** à tige tels que des rivets, des pointes, des crampons, et/ou des systèmes vis-écrous. Les moyens de fixation **110** traversent dans l'épaisseur et successivement : une première des deux plaques de jonction **101** ou **102,** puis une des deux portions d'extrémité **11** ou **12,** et enfin la seconde des deux plaques de jonction **101** ou **102.** Dans ce premier mode de réalisation, les moyens de fixation **110** sont des vis comprenant chacune une tête **111** et un tronçon d'ancrage **112** muni d'un filetage, les plaques de jonction **101, 102** comportant des premières interfaces **113** pour coopérer avec les têtes **111** des moyens de fixation **110** et/ou des deuxièmes interfaces **114** pour coopérer avec les tronçons d'ancrage **112** des moyens de fixation **110.** Les premières et deuxièmes interfaces **113, 114** sont portées par des inserts noyés dans les plaques de jonction **101, 102** ou rapportés (par exemple une rondelle **115**)**.** De préférence l'insert portant la deuxième interface, ici l'insert taraudé, épouse localement une portion d'un câble **4** ou d'un groupe de câbles **4,** par exemple en suivant une même courbure, de sorte à permettre un serrage important sans le déformer (voir la figure 5).

Les premières interfaces **113** comportent des rondelles **115** percées verticalement comportant chacune une cuvette apte à loger une tête **111** de l'un des moyens de fixation **110.** Dans une telle configuration, les rondelles **115** formant premières interfaces **113** forment ainsi des pièces rapportées s'associant autour et en complément d'un orifice de la plaque de jonction supérieure **101** adapté pour être traversé par le moyen de fixation **110.** Ces rondelles **115** présentent chacune sur leur périphérie des pointes orientées vers la plaque de jonction qui la supporte pour pénétrer et venir en prise dans ladite plaque de jonction. Alternativement, ou bien en combinaison, par exemple dans le cas où des premières interfaces **113** différentes sont intégrées ensemble à une même plaque de jonction, ces rondelles **115** peuvent être incorporées dans la plaque de jonction **101,** c'est-à-dire noyées dans la matière souple et élastique comme par exemple le caoutchouc vulcanisé formant la plaque de jonction associée.

Les deuxièmes interfaces **114** comportent une partie tubulaire cylindrique **116** dont une surface cylindrique intérieure est apte à coopérer avec le tronçon d'ancrage **112** des moyens de fixation **110,** grâce ici à un taraudage complémentaire du filetage du tronçon d'ancrage **112.**

Conformément à l'invention, la jonction **10** comprend une armature **20** de jonction rapportée sur la première portion d'extrémité **11** et une autre armature **20** rapportée sur la deuxième portion d'extrémité **12.** Ces armatures **20** sont configurées pour retenir tout ou partie des moyens de fixation **110** du dispositif de jonction **100** lorsqu'un effort de traction est réalisé entre le dispositif de jonction **100** et la bande transporteuse **1.**

En particulier, les armatures **20** sont rapportées sur les première et deuxième portions d'extrémités **11, 12,** qui sont amincies en épaisseur, ceci
- après une étape de décorticage de la première portion d'extrémité **11** et de la deuxième portion d'extrémité **12** de la bande transporteuse **1** dont il résulte l'obtention de la nappe centrale **1A** dégarnie intégrant les câbles, l'épaisseur de la portion d'extrémité **11, 12** étant de préférence réduite à celle des câbles **4,** et
- avant la mise en place du dispositif de jonction **100** par lequel les deux plaques de jonction **101, 102,** viennent se superposer à cheval, sur les première et deuxième portions d'extrémités **11, 12** de la bande transporteuse **1** munies desdites armatures **20.**

Les armatures **20** comportent des éléments de retenue **30** comprenant une pluralité de crampons **301.** Chaque crampon **301** présente une forme générale de « U » avant sa fixation à la bande transporteuse. Un crampon **301** est formé à partir d'une tige monobloc, à savoir d'un seul tenant et de préférence métallique. Le corps **31** des crampons **301** est formé à partir d'une partie transversale centrale de la tige formant l'interface de rétention **32,** ledit corps **31** étant configuré pour s'étendre transversalement par rapport à la bande transporteuse **1.** La partie centrale de la tige est intercalée entre deux parties latérales de tige formant les organes d'ancrage **40.** Autrement dit, chaque crampon **301** comprend des pattes d'ancrage **33** formées à partir de prolongements de la partie centrale de la tige, à savoir de part et d'autre du corps **31.**

Ces organes d'ancrage **40,** ici les pattes d'ancrage **33,** présentent chacune la forme d'une tige et comportent des pointes à leurs extrémités pour faciliter leur introduction dans la portion d'extrémité **11, 12** associée pour la traverser verticalement dans son épaisseur. Les pointes des pattes d'ancrage **33** de chaque crampon **301** sont repliées ou recourbées sous la portion d'extrémité **11, 12** correspondante après leur insertion pour verrouiller la fixation du crampon **301** une fois installé et assurer qu'il ne puisse pas se retirer durant l'utilisation de la bande transporteuse **1.**

L'interface de rétention **32** des éléments de retenue **30** est configurée pour retenir des moyens de fixation **110** lorsqu'un effort de traction est réalisé entre le dispositif de jonction **100** et la bande transporteuse **1.** L'interface de rétention **32** est supportée par le corps **31** de ces dits éléments de retenue **30.** Les pattes d'ancrage **33** d'un même crampon **301** viennent s'ancrer dans deux câbles **4** distincts d'une même portion d'extrémité **11, 12** correspondante, les câbles **4** s'étendant axialement par rapport à la bande transporteuse **1.** Le corps **31** de chaque crampon **301** vient alors se positionner au moins en partie transversalement entre deux câbles **4** adjacents formant un pont de liaison entre les deux câbles **4,** donc également transversalement suivant un axe **Y** par rapport à la bande transporteuse **1.** Les deux pattes d'ancrage **33** d'un même crampon **301** sont espacées d'une distance **d** égale à une distance séparant les axes centraux de deux câbles **4** de la portion d'extrémité **11, 12** correspondante (voir la figure 5). De façon plus générale, cette distance **d** est choisie de sorte à être un multiple d'un espacement moyen entre deux câbles pour garantir une répartition homogène des câbles suivant la largeur de la bande transporteuse **1.** Bien entendu, des variantes peuvent être possibles, comme un crampon avec plus de deux pattes d'ancrage **33,** par exemple trois, venant chacune s'ancrer dans un des câbles parmi trois câbles adjacents.

Les crampons **301** de chacune des armatures **20** sont répartis de manière homogène sur chacune des deux portions d'extrémité **11, 12** selon un motif adapté. En effet, chacune des deux portions d'extrémité **11, 12** doit comporter suffisamment d'éléments de retenue **30** pour assurer sa fonction de retenue des moyens de fixation **110** du dispositif de jonction **100** lorsqu'un effort de traction sur la bande, mais pas trop pour ne pas dégrader significativement la souplesse de ladite bande transporteuse **1** au niveau de la jonction **10.**

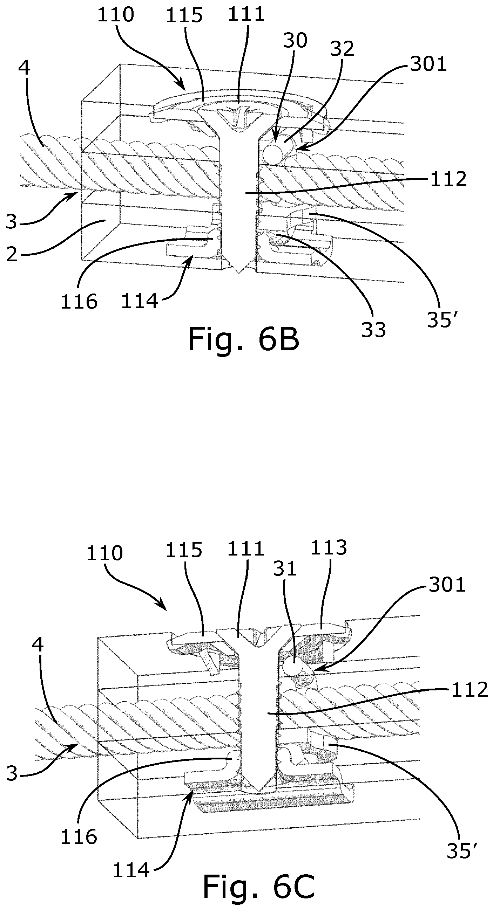

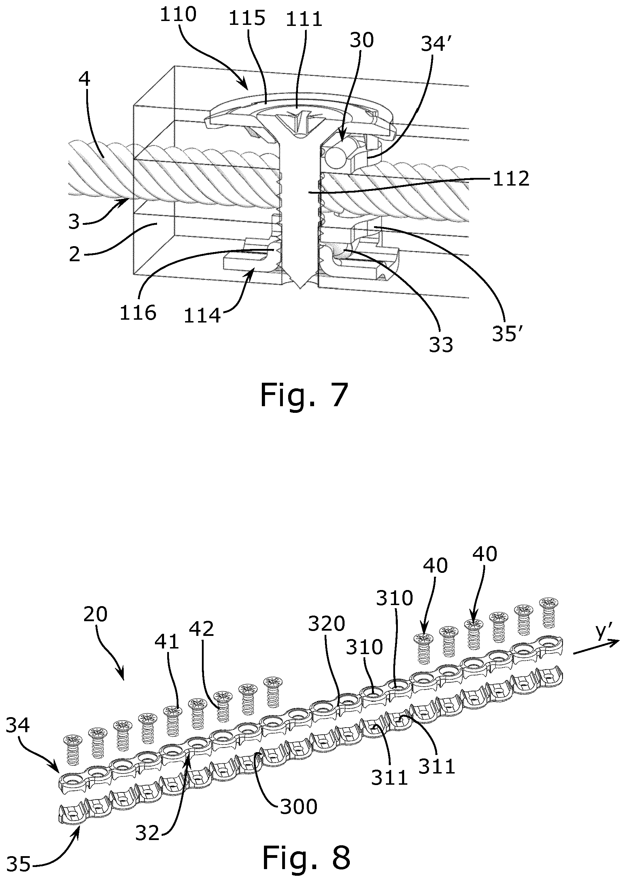

Lors de l'utilisation de la bande transporteuse **1,** celle-ci se déplace longitudinalement de sorte à transporter les différents matériaux ou produits. Ce transport implique un effort de résistance dans la bande transporteuse **1** qui travaille en traction. Au niveau de la jonction **10** notamment, les efforts de traction tendant à écarter la première portion d'extrémité **11** de la deuxième portion d'extrémité **12** alors retenues l'une par rapport à l'autre par le dispositif de jonction **100.** En effet, lorsqu'elle est sollicitée par un tel effort de traction, l'une des deux portions d'extrémités **11, 12** applique un effort tirant sur les moyens de fixation **110** du dispositif de jonction **100** qui les traverse, les moyens de fixation **110** étant maintenus par les plaques de jonction **101, 102** du dispositif de jonction **100,** elles-mêmes retenues par l'autre des deux portions d'extrémités **11, 12,** de préférence de façon symétrique par rapport à un plan de jonction vertical parallèle à l'axe transversal Y et situé entre, voire contenant, les deux bord d'extrémité **11'**, **12'.** Les plaques de jonction **101, 102** du dispositif de jonction **100** sont donc fortement sollicitées en tractions, et les moyens de fixation **110** permettent de retenir l'écartement axial des portions d'extrémité **11, 12** l'une par rapport à l'autre. L'armature **20** forme un renfort de la portion d'extrémité **11, 12** associée en reprenant les efforts de traction des vis **110** qui viennent en appui contre les interfaces de rétention **32** des éléments de retenue **30** placés sur leur chemin lors de la traction. De tels appuis sont illustrés en détail en référence aux figures 6A, 6B, 6C et 7 selon différentes variantes.

Chaque élément de retenue **30** est disposé longitudinalement entre l'un au moins des moyens de fixation **110** et l'un des bords d'extrémités **11'**, **12',** de la bande transporteuse **1,** c'est-à-dire de la portion d'extrémité **11, 12** associée. De cette manière, les moyens de fixation **110** sont retenus par les éléments de retenue **30** en venant en appui, directement ou indirectement, contre au moins une des interfaces de rétention **32.** Ces moyens de retenue **30** sont par ailleurs fixés à au moins deux câbles **4** distincts, de préférence deux câbles **4** adjacents comme illustré dans ce mode de réalisation. De cette manière, chaque élément de retenue **30** forme un obstacle au déplacement longitudinal des vis **110** lors de l'application des efforts de traction de la portion d'extrémité **11, 12** associée par rapport au dispositif de jonction **100.** Une telle caractéristique contribue à renforcer la liaison entre les deux portions d'extrémités **11, 12,** renforçant par conséquent la jonction **10.**

Les interfaces de rétention **32** portées par les éléments de retenue **30** qui sont ancrés dans la première portion d'extrémité **11** retiennent les moyens de fixation **110** du dispositif de jonction **100** dans un premier sens de traction **T1** (voir la figure 1B). Les interfaces de rétention **32** portées par les éléments de retenue **30** qui sont ancrés dans la deuxième portion d'extrémité **12** retiennent quant à eux les moyens de fixation **110** du dispositif de jonction **100** dans un deuxième sens de traction **T2,** opposé au premier sens de traction **T1.** Ainsi, lorsqu'un effort de traction est réalisé entre le dispositif de jonction **100** et chacune des extrémités de la bande transporteuse **1,** les armatures **20** participent au maintien de l'écartement longitudinal relatif des portions d'extrémité **11, 12** et la tenue structurelle des extrémités de la bande transporteuse **1** et de la jonction **10** est garantie pour résister à des efforts de traction importants. Par ailleurs, le fait que les éléments de retenue **30** sont situés seulement au niveau des portions d'extrémités amincies **11, 12,** l'impact de cesdits éléments de retenue **30** sur la souplesse de la bande est réduit. Enfin, quand bien même les moyens de fixation **110** à tige traversent les câbles **4** de renfort, l'effort de traction d'un seul moyen de fixation **110** est réparti sur au moins deux câbles, ce qui réduit la reprise d'effort de traction par câble **4** ce qui limite l'effet de détoronnage.

Dans ce mode de réalisation, les éléments de retenue **30** sont disposées suivant plusieurs, en particulier trois, alignements transversaux ou rangées distinctes par portion d'extrémité **11, 12.** Les éléments de retenue **30** sont en outre disposées suivant plusieurs alignements longitudinaux par portion d'extrémité **11, 12,** chaque alignement longitudinal d'une portion d'extrémité **11, 12** étant aligné avec un alignement longitudinal de l'autre portion d'extrémité **12, 11.** Chaque moyen de retenue **30** est fixés à deux câbles **4** adjacents distincts. Un câble est ici relié par les moyens de retenue **30** à un seul câble adjacent de sorte que les câbles sont reliés par paires indépendantes. Dans une telle configuration, l'un des câbles sur un bord latéral peut ne comporter aucun élément de retenue qui le traverse si la portion d'extrémité **11, 12** comprend un nombre impair de câbles. De manière générale, une telle configuration est intéressante en ce qu'elle conserve une bonne souplesse de la jonction **10** pour favoriser la mise en auge de la bande transporteuse **1.** Bien entendu, une telle répartition des éléments de retenue **30** peut être différente. Par exemple, les éléments de retenue **30** comprenant les crampons **301** peuvent être disposés en quinconce, de sortent qu'ils se placent par exemple suivant trois alignements transversaux ou rangées distinctes par portion d'extrémité **11, 12,** les crampons **301** étant, d'une rangée à l'autre, décalés d'un pas correspondant à un espace moyen entre deux câbles **4.** Cette répartition dépend également du motif formé par les moyens de fixation **110** sur le dispositif de jonction **100.**

On notera que ce premier mode de réalisation prévoit des moyens de fixation **110** traversant les deux plaques de jonction **101, 102** du dispositif de jonction **100** selon une rangée centrale, sans traverser l'une ou l'autre des portions d'extrémités **11, 12** mais traversant un espace délimité longitudinalement entre les deux bords d'extrémités **11'**, **12'** de la bande transporteuse **1.** On notera que dans un mode de réalisation alternatif, les deux portions d'extrémité **11, 12** peuvent être aboutées dans la jonction. Dans ce cas, si une rangée centrale de moyens de fixation **110** est prévue, lesdits moyens de fixation **110** de cette rangée traversent l'une des portions d'extrémité qui présente une longueur adaptée, légèrement plus grande que celle de l'autre portion d'extrémité. Une autre variante encore est que les deux plaques de jonction **101, 102** sont liées en leur centre par une jonction de matière formant un profil en « H » du dispositif de jonction **100,** cette jonction pouvant être formée d'un seul tenant avec l'une et/ou l'autre des deux plaques de jonction **101, 102,** ou bien former une pièce rapportée.

Deux rangées de moyens de fixation **110** sont disposées de sorte à border les extrémités longitudinales du dispositif de jonction **100** et comportent en outre une bordure de protection saillante longitudinalement vers l'extérieur de la jonction **10** à partir des premières interfaces **113,** ici les rondelles **115.** Les deux bordures délimitant longitudinalement la plaque de jonction supérieure **101** sont alors renforcées ce qui limite le risque d'usure pouvant créer un relief, et donc le risque que la plaque de jonction puisse venir sur le chemin d'éventuels racleurs. Bien entendu, une telle bordure renforcée peut être appliquée en complément ou en variante sur la plaque de jonction inférieure **102.**

Les figures 3, 4A, 4B, 5, 6 et 7 illustrent d'autres modes de réalisation qui diffèrent du premier mode de réalisation notamment en ce que le dispositif de jonction **100** est configuré en ce que chaque moyen de fixation **110** vient en appui contre des éléments de retenue **30** distincts placés sur leur chemin lors de la traction. Le motif formé par la disposition des moyens de fixation **110** liant les deux plaques de jonction **101, 102** et traversant l'une des portions d'extrémité **11, 12** correspondante est donc associé et similaire à celui des éléments de retenue **30.** La répartition des moyens de fixation **110** dépend alors de celle des éléments de retenue **30.** Une telle structure offre une résistance à la traction améliorée. Ces modes de réalisation sont dépourvus ici de rangée centrale de moyens de fixation **110.**

Au contraire, dans le premier mode de réalisation illustré sur les figures 1A et 1B, les moyens de fixation **110** du dispositif de jonction **100** ne sont parfaitement alignés longitudinalement deux à deux avec chacune des interfaces de rétention **32** des éléments de retenue **30.** En effet, le motif formé par les éléments de retenue **30** sur les première et deuxième portions d'extrémités **11, 12** peut être choisi, de sorte qu'une majorité, et pas nécessairement la totalité, des moyens de fixation **110** du dispositif de jonction **100** sont retenus par, et alignés longitudinalement avec, les éléments de retenue **30** en venant en appui directement ou indirectement contre au moins une interface de rétention **32.** En effet, un tel mode de réalisation est pratique dans le cas où les armatures **20** et le dispositif de jonction **100** sont fixés dans des conditions difficiles, ou bien que la précision de l'assemblage n'est pas parfaite. Cela permet de réduire le temps nécessaire à la mise en place de l'armature **20.** Dans ce cas, l'effet de retenue est toujours garanti quand bien même certains éléments de fixation **110** peuvent être disposés en traversant un câble **4** et/ou décalés par rapport à un élément de retenue **30** de l'armature **20.** Dans une telle configuration, la disposition des moyens de fixation **110,** ici les vis, aléatoire par rapport au pas des câbles de la bande **1** combine de préférence un appui sur les éléments de retenue **30,** un serrage desdites vis **110** sur la bande et un passage de certains moyens de fixation **110** à travers les câbles.

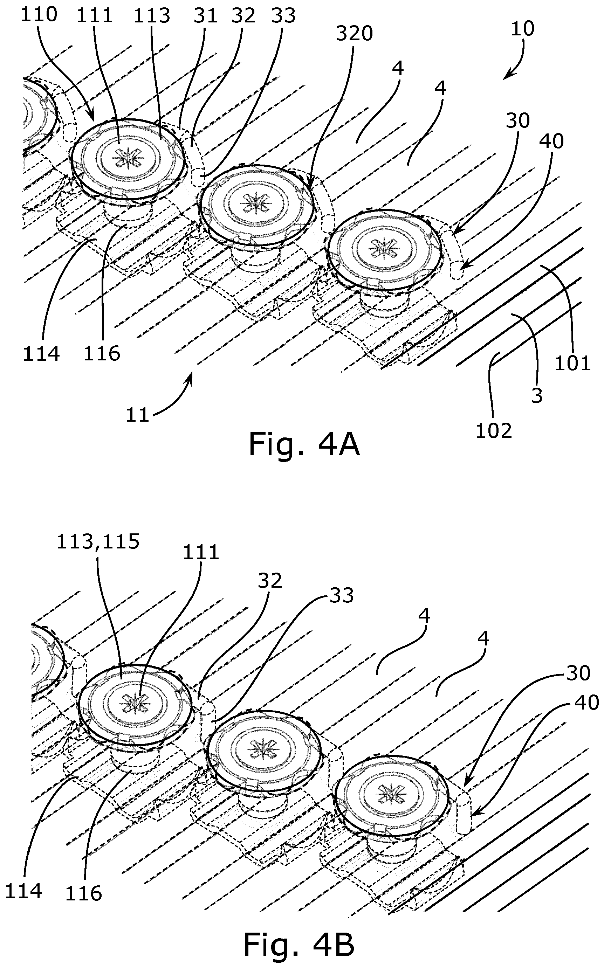

En référence aux figures 3 et 4A, ce deuxième mode de réalisation illustre des éléments de retenue **30** de type crampon **301** comparable au premier mode de réalisation à la différence que leur interface de rétention **32** présente une concavité **320** orientée ou ouverte longitudinalement. Cette concavité **320** forme l'interface de rétention **32** permettant de recevoir en appui, direct ou indirect, l'un au moins des moyens de fixation **110,** ici un seul. Cet appui forme un berceau de réception pour un moyen de fixation **110** à tige, en particulier la tige elle-même, minimisant les mouvements relatifs transversaux entre la portion d'extrémité associée et le dispositif de jonction **100** et permettant une répartition uniforme des efforts repris sur les deux câbles dans lesquels le crampon **301** associé est ancré grâce aux organes d'ancrage **40,** en particulier ici les pattes d'ancrage **33.**

Les figures 4B et 5, illustrent des vues d'un troisième mode de réalisation qui diffère essentiellement du deuxième en ce que les interfaces de rétention **32** des éléments de retenue **30** de type crampon **301** sont rectilignes, de façon similaire au premier mode de réalisation.

Les figures 6A, 6B et 6C illustrent des vues d'un quatrième mode de réalisation qui diffère essentiellement du deuxième en ce que les interfaces de rétention **32** des éléments de retenue **30** de type crampon **301** sont rectiligne, de façon similaire au premier mode de réalisation. Par ailleurs, chaque élément de retenue **30** comprend une pièce inférieure **35'** configurée pour relier deux organes d'ancrage **40,** en particulier deux pattes d'ancrage **33** d'un même élément de retenue **30.** Chaque pièce inférieure **35'** est située du côté opposé verticalement au côté de la portion d'extrémité recevant le corps **31** de la tige des crampons **301.** Les pièce inférieure **35'** présentent globalement une forme oblongue présentant une concavité au moins sur une paroi latérale frontale et orientée longitudinalement. Cette concavité **320** forme une interface de rétention **32** complémentaire de celle portée par le corps **31** du crampon **301** et permet de recevoir en appui, direct ou indirect, l'un au moins des moyens de fixation **110.** Une telle concavité **320** permet d'assurer une meilleure répartition des efforts sur les câbles dans lesquels l'élément de retenue associé est ancré. Une empreinte adaptée est prévue sur l'un des côtés de chaque pièce inférieure **35'** pour recevoir une partie au moins de chacune des deux pattes d'ancrage **33** du crampon **301** recourbées sous la portion d'extrémité **11, 12.**

La figure 7 illustre une vue en perspective de dessus d'une coupe locale d'un appui d'un moyen de fixation contre un élément de retenue selon un cinquième mode de réalisation. Ce mode de réalisation diffère du quatrième mode de réalisation précédent, en ce qu'il comporte, en plus d'une pièce inférieure **35',** une pièce supérieure **34'** recevant le crampons **301.** Les fonctions des pièces inférieure **35'** et supérieure **34'** sont similaires à celles des pièces inférieure et supérieure **34, 35** du corps **31** en référence aux modes de réalisation décrits ci-après puisque chaque élément de retenue **30** comprend une pièce supérieure **34** et une pièce inférieure **35** reliées ensemble par les organes d'ancrage **40.** Les pièces inférieure et supérieure **34, 35** du corps **31** de chaque élément de retenue **30** forment des inserts destinés à venir de part et d'autre verticalement de la première portion d'extrémité **11, 12** associée de la bande transporteuse **1,** dans le sens de son épaisseur **e.** La pièce supérieure **34'** comprend une empreinte adaptée sur l'un de ses côtés pour recevoir une partie au moins du corps **31** du crampon **301,** qu'il soit rectiligne ou qu'il présente une concavité **320.** La présence de la pièce supérieure **34'** déporte ici l'interface de l'interface de rétention **32** au niveau de son bord latéral. En effet, le corps **31** des éléments de retenue **30** comprend la pièce supérieure **34'** formant une pièce rapportée portant l'interface de rétention **32.**

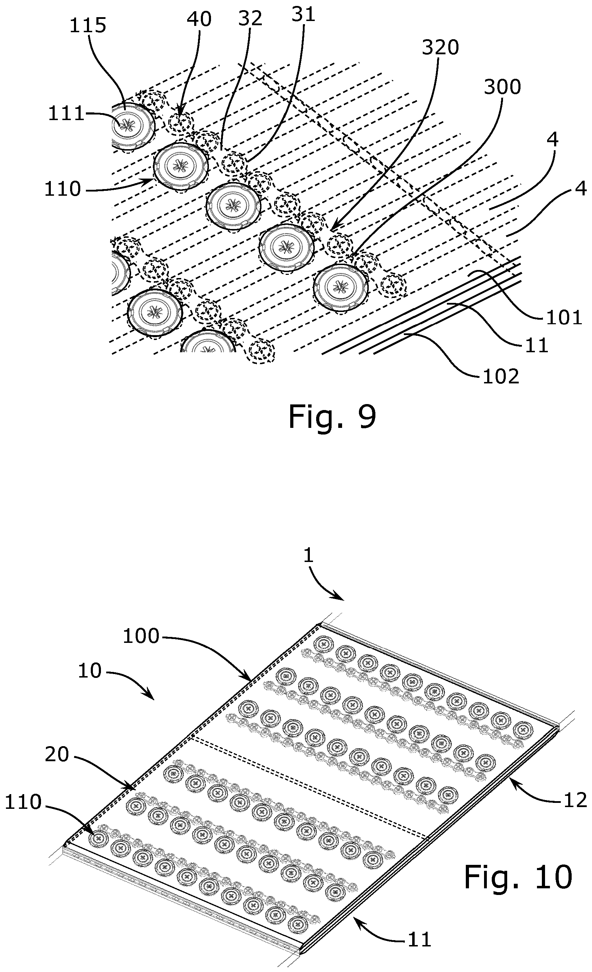

Les figures 8, 9 et 10 illustrent des vues d'une armature **20** pour une jonction **10** selon un sixième mode de réalisation. Ce sixième mode de réalisation diffère essentiellement des précédents en ce que le corps **31** de chaque élément de retenue **30** comprend une pièce supérieure **34** et une pièce inférieure **35** reliées ensemble par les organes d'ancrage **40.** Les pièces inférieure et supérieure **34, 35** du corps **31** de chaque élément de retenue **30** forment des inserts destinés à venir de part et d'autre verticalement de la première portion d'extrémité **11, 12** associée de la bande transporteuse **1,** dans le sens de son épaisseur **e.** Les organes d'ancrage **40** comprennent des vis munies d'une tête **41** et d'une tige filetée au moins en partie formant tronçon d'ancrage **42.** Les organes d'ancrage **40** traversent la portion d'extrémité **11, 12** associée verticalement dans son épaisseur pour relier et enserrer les pièces inférieure et supérieure **34, 35** du corps **31** contre chaque côté verticalement de la portion d'extrémité **11, 12** associée.

La pièce supérieure **34** forme une plaque métallique d'un seul tenant et comporte deux cuvettes **310,** telles que des fraisures, chacune étant apte à loger une tête **41** de l'un des organes d'ancrage **40.** La pièce inférieure **35** opposée verticalement à la pièce supérieure **34** par rapport à la portion d'extrémité associée forme une autre plaque métallique d'un seul tenant et comporte deux interfaces d'ancrage **311,** telles que des taraudages, avec lesquelles sont aptes à coopérer chacun des tronçons d'ancrage **42** des deux organes d'ancrage **40** de type vis.

Un avantage de ce mode de réalisation est que plusieurs des éléments de retenue **30** sont solidarisés ensemble suivant un axe **Y'** destiné à s'étendre transversalement, c'est-à-dire parallèlement à un axe transversal Y de la bande transporteuse **1.** Une telle solidarisation est configurée de préférence de sorte que la longueur de cet ensemble corresponde à la largeur de la bande transporteuse **1.** De cette manière, l'armature **20** peut être positionnée rapidement directement par rangée d'une pluralité d'éléments de retenue **30** solidaires entre eux.

L'interface de rétention **32** de chacun des éléments de retenue **30** est supportée par le corps **31** de ces dits éléments de retenue **30.** Les pièces supérieures **34** et inférieures **35** des éléments de retenue **30** présentent globalement une forme oblongue présentant une concavité au moins sur une paroi latérale frontale et orientée longitudinalement. Cette concavité **320** forme l'interface de rétention **32** permettant de recevoir en appui, direct ou indirect, l'un au moins des moyens de fixation **110.** Cet appui forme un berceau de réception pour un moyen de fixation **110** à tige, en particulier la tige elle-même, minimisant les mouvements relatifs transversaux entre la portion d'extrémité associée et le dispositif de jonction **100.** De préférence la concavité **320** épouse la forme du câble qu'il retient, avec par exemple un angle de 1/3.

Chaque pièce supérieures **34** et inférieures **35** d'un même élément de retenue **30** comporte des pointes orientées vers la portion d'extrémité **11, 12** qui la supporte et configurées pour pénétrer dans ladite portion d'extrémité **11, 12** pour participer à l'ancrage de l'élément de retenue **30** dans le corps **2** de la portion d'extrémité **11, 12,** ceci en complément des organes d'ancrage **40** traversant les câbles **4.**

Les éléments de retenue **30** comportent chacun deux organes d'ancrage **40** espacés d'une distance **d** suffisante pour garantir un ancrage sur deux câbles **4** de renfort adjacents. Cette distance **d** est égale à une distance séparant les axes centraux de deux câbles **4** de la portion d'extrémité **11, 12** correspondante. Une rangée d'un seul tenant d'une pluralité d'éléments de retenue **30** est configurée pour que chaque élément de retenue **30** soit lié à un autre élément de retenue **30** par une liaison souple **300** de sorte à favoriser la mise en auge de la bande transporteuse, à savoir sa flexibilité transversale. Un tel avantage est encore amélioré dans le cas où ces liaisons, souples **300** ou non, sont rompues ou séparées lors d'une opération de séparation des éléments de retenue **30,** par exemple après une étape de fixation des organes d'ancrage **40,** et plus généralement après l'étape de mise en place de l'armature **20.**

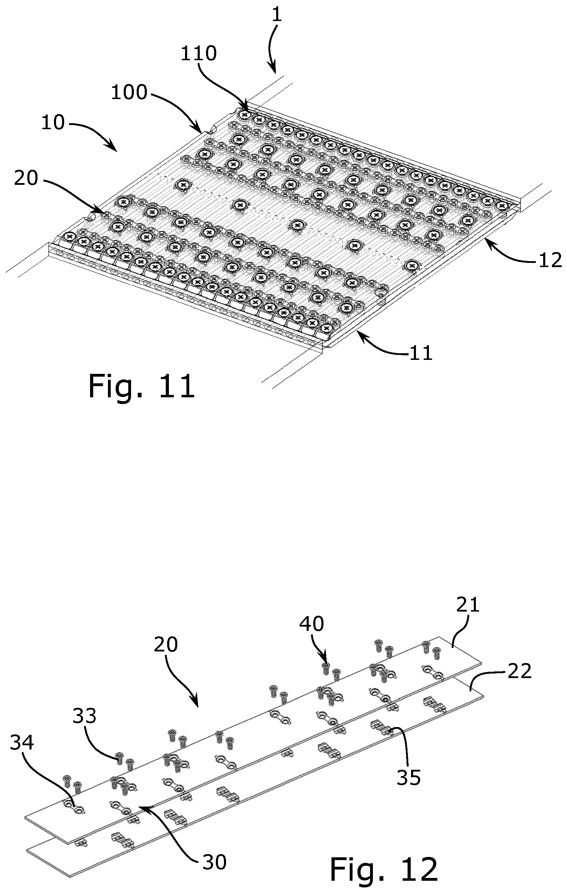

La figure 11 illustre une vue en perspective de dessus d'une jonction assemblée selon un septième mode de réalisation dans lequel, par rapport au sixième mode de réalisation, une rangée de moyens de fixation **110** est disposée de sorte à border chaque extrémité longitudinale du dispositif de jonction **100** avec une bordure de protection saillante longitudinalement à partir des premières interfaces **113,** ceci de façon comparable au premier mode de réalisation.

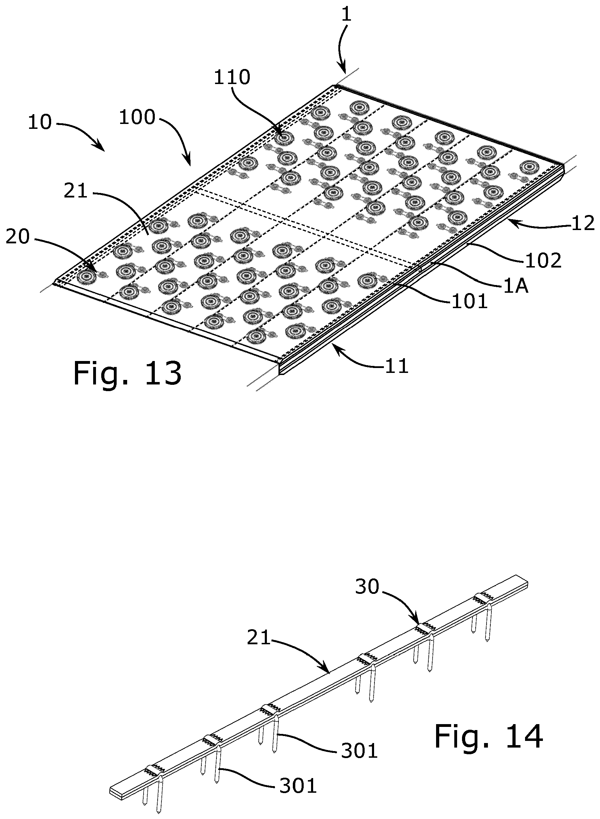

Les figures 12 et 13 illustrent des vues des plaques de support **21, 22** pour une jonction **10** selon un huitième mode de réalisation.

Ce mode de réalisation comporte des éléments de retenue **30** comparables aux sixième et septième modes de réalisation. Toutefois, ce mode de réalisation diffère essentiellement de ceux-ci en ce que les éléments de retenue **30** ne sont pas liés ensemble suivant des rangées continues s'étendant transversalement suivant la largeur de la bande transporteuse **1** mais présentent des plaques de support **21, 22** comportant une pluralité d'éléments de retenue **30.** Les plaques de support **21, 22** sont configurées pour s'étendre longitudinalement de sorte à recouvrir un même côté de la première portion d'extrémité **11** et de la deuxième portion d'extrémité **12** de la bande transporteuse **1** sur au moins une portion transversale prédéterminée, voire toute la largeur de la bande transporteuse intégrant une partie des éléments de retenue **30** de sorte à permettre un pré-positionnement desdits éléments de retenue **30** lorsque l'on vient installer l'armature **20.** En particulier, l'armature **20** comporte :
- des plaques de support supérieures **21** sous forme de bandes qui comportent chacune une pluralité de pièces supérieures **34** d'éléments de retenue **30** réparties suivant un certain motif sur ou dans la plaque de support ; et
- des plaques de support inférieures **22** sous forme de bandes qui comportent les pièces inférieures **35** des éléments de retenue **30** réparties suivant le même motif que celui des pièces supérieures **34** des plaques de support supérieures **21** qui se superposent verticalement de sorte à permettre l'alignement des cuvettes **310** avec les interfaces d'ancrage **311** pour leur solidarisation par vissage .

Ce motif prédéterminé peut être configuré pour obtenir des éléments de retenue **30** disposés suivant des alignements longitudinaux et/ou transversaux, seuls ou par groupe de plusieurs tel que par paire, suivant des alignements transversaux, donc par rangée avec des décalages longitudinaux comme en quinconce, etc. Une disposition alternée des inserts **34, 35** permet de favoriser la mise en auge de la jonction et aussi l'enroulement autour des rouleaux de renvoi du convoyeur sans créer une ligne d'amorce de rupture.

Les plaques de support **21, 22** sont de préférence formées dans le même matériau que celui du corps de la bande transporteuse **1.** Mais cela peut varier et elles peuvent comprendre un corps en matériau flexible et plus généralement en un élastomère ou en matière de synthèse. Dans ce mode de réalisations, les inserts **34, 35** sont prémoulés dans du caoutchouc, du polyuréthane (PU) ou toute autre matière.

De cette manière, les armatures se présentent sous forment de plaques de support **21, 22** faciles à fixer sur les portions d'extrémité **11, 12** de la bande **1.** Une fois les plaques de support installées, il suffit de les solidariser avec les organes d'ancrage tels que les vis **40.** Les plaques de support **21, 22** recouvrent ici la première portion d'extrémité **11** et la deuxième portion d'extrémité **12,** entièrement sur leur longueur. Toutefois elles présentent une largeur plus étroite que la bande transporteuse **1** elle-même de sorte qu'il faut accoler une pluralité de plaques de support **21, 22** transversalement pour recouvrir entièrement sur la largeur la première portion d'extrémité **11** et de la deuxième portion d'extrémité **12.** De cette manière, il peut être fabriqué des plaques de support plus facilement. Elles peuvent être fabriquées en une bande continue ou de grande dimension longitudinale puis découpées à la longueur souhaitée. En fonction de la largeur des plaques de support, il est également possible de s'adapter facilement à la largeur de la bande **1.**

La figure 14 illustre une vue d'une plaque de support **21** pour une jonction selon un neuvième mode de réalisation. Cette plaque de support est ici sous forme d'une liaison longitudinale de plusieurs éléments de retenue **30.** Une unique plaque de support **21** supérieure relie une pluralité de crampons **301.** On notera que divers matériaux peuvent être employés pour former la plaque de support, tels qu'un matériau plus souple comme du cuir ou un renfort textile.

La fabrication d'une jonction **10** de bande transporteuse **1** suivant l'invention est donc particulièrement simple et comporte globalement les étapes suivantes :
- décorticage d'une partie supérieure et d'une partie inférieure du corps **2** de la bande transporteuse au niveau de la première portion d'extrémité **11** et de la deuxième portion d'extrémité **12** de la bande transporteuse **1,** permettant d'obtenir une nappe centrale **1A** dégarnie et munie des extrémités des câbles ;
- mise en place d'au moins une armature **20** de jonction rapportée sur la première portion d'extrémité **11** et la deuxième portion d'extrémité **12** de la bande transporteuse **1;**
- mise en place du dispositif de jonction **100** de sorte à joindre les première et deuxième portions d'extrémités **11, 12** de la bande transporteuse **1.**

En résumé, une telle jonction permet de limiter la préparation des portions d'extrémité à seulement l'enlèvement des revêtements supérieur et inférieur de la bande pour aboutir à une portion d'extrémité amincie correspondant à la nappe centrale, facilitant ainsi la mise en œuvre.

L'utilisation d'une telle armature selon l'invention permet de créer ou recréer une trame grâce aux interfaces de rétention **32,** entre chaque câble ou suivant une autre configuration, par exemple un câble sur deux, pour la souplesse de la jonction et suivant la résistance de bande, en traversant les câbles à l'aide des organes d'ancrage **40.**

Par ailleurs, une telle armature est compatible avec l'utilisation d'un dispositif de jonction connu de l'art antérieur, facilitant l'approvisionnement des utilisateurs et réduisant les coûts.

Au montage, un serrage des moyens de fixation **110** de la jonction dans les portions d'extrémité comportant les câbles suffit à fixer l'armature sur les portions d'extrémités de la bande transporteuse. Le glissement est alors limité puisque la fixation vient en butée sur l'armature créée avec les interfaces de rétention lorsqu'un effort de traction est appliqué sur la bande transporteuse.

En combinant l'effort de serrage des moyens de fixation **110** du dispositif de jonction **100** et l'appui des vis sur l'armature, nous obtenons une liaison suffisante pour résister aux efforts souhaités.

Naturellement, l'invention est décrite dans ce qui précède à titre d'exemple. Il est entendu que l'homme du métier est à même de réaliser différentes variantes de réalisation de l'invention sans pour autant sortir du cadre de l'invention.

Par exemple, il est entendu que d'autres moyens de fixation ou moyens d'ancrage que les vis peuvent être utilisés tout en assurant la même fonction. Par ailleurs, les orientations verticales des éléments de retenue et/ou des moyens de fixations peuvent être différentes, leur sens étant alors dans ce cas inversé par rapport aux figures.

Enfin, le vocable « transversal » liés au bord de l'armature, ou de la plaque de jonction doit être compris comme s'étendant, une fois le dispositif de jonction assemblé avec les extrémités de la bande, d'un côté à l'autre de la bande transporteuse en la traversant sur sa largeur. Cela ne limite pas l'invention à une disposition des plaques de jonction perpendiculairement à la bande transporteuse, le dispositif de jonction pouvant parfaitement présenter un angle différent de 90° par rapport à l'axe longitudinal.

Il est souligné que toutes les caractéristiques, telles qu'elles se dégagent pour un homme du métier à partir de la présente description, des dessins et des revendications attachées, même si concrètement elles n'ont été décrites qu'en relation avec d'autres caractéristiques déterminées, tant individuellement que dans des combinaisons quelconques, peuvent être combinées à d'autres caractéristiques ou groupes de caractéristiques divulguées ici, pour autant que cela n'a pas été expressément exclu ou que des circonstances techniques rendent de telles combinaisons impossibles ou dénuées de sens.

## Revendications

1. Armature (20) de jonction (10) destinée à être rapportée sur au moins une première portion d'extrémité (11) d'une bande transporteuse (1) du type comportant un corps (2) en matériau flexible à l'intérieur duquel est logé un renfort (3) comprenant des câbles (4), l'armature (20) comprenant des éléments de retenue (30) présentant au moins un corps (31) configuré pour s'étendre au moins en partie transversalement par rapport à la bande transporteuse (1) et des organes d'ancrage (40) configurés pour venir en prise avec une partie au moins des câbles (4) en traversant une épaisseur de la première portion d'extrémité (11) de manière à fixer le corps (31) des éléments de retenue à la première portion d'extrémité (11) de la bande transporteuse (1), les éléments de retenue (30) comportant une interface de rétention (32) pour retenir des moyens de fixation (110) d'un dispositif de jonction (100) destiné à relier la première portion d'extrémité (11) à une deuxième portion d'extrémité (12) de la bande transporteuse (1) lorsque les première et deuxième portions d'extrémités (11, 12) sont disposées entre deux plaques de jonction (101, 102) du dispositif de jonction (100) fixées ensemble par lesdits moyens de fixation (110), l'interface de rétention (32) étant configurée pour retenir les moyens de fixation (110) lorsqu'un effort de traction est réalisé entre le dispositif de jonction (100) et la bande transporteuse (1).

2. Armature (20) de jonction (10) selon la revendication 1, **caractérisé en ce que** les organes d'ancrage (40) comprennent chacun une tige configurée pour traverser la première portion d'extrémité (11).

3. Armature (20) de jonction (10) selon la revendication 1 ou 2, **caractérisée en ce que** l'interface de rétention (32) de certains au moins des éléments de retenue (30) est supportée par le corps (31) de ces dits éléments de retenue (30).

4. Armature (20) de jonction (10) selon l'une quelconque des revendication précédentes, **caractérisée en ce qu'**au moins plusieurs des éléments de retenue (30) sont solidarisés ensemble suivant un axe (Y') destiné à s'étendre transversalement par rapport à la bande transporteuse (1).

5. Armature (20) de jonction (10) selon l'une quelconque des revendications précédentes, **caractérisée en ce qu'**elle comprend au moins une plaque de support (21, 22) configurée pour recouvrir une partie au moins d'un même côté de la première portion d'extrémité (11) et de la deuxième portion d'extrémité (12) de la bande transporteuse (1), la plaque de support (21, 22) comportant au moins une partie de plusieurs des éléments de retenue (30) répartis suivant un motif prédéterminé, par exemple en quinconce.

6. Armature (20) de jonction (10) selon l'une quelconque des revendications précédentes, **caractérisée en ce que** la distance (d) séparant deux organes d'ancrage (40) d'un élément de retenue (30) est configurée pour correspondre à une distance séparant deux câbles (4) de la première portion d'extrémité (11) de la bande transporteuse (1).

7. Armature (20) de jonction (10) selon l'une quelconque des revendications précédentes, **caractérisée en ce que** certains au moins des organes d'ancrage (40) d'au moins certains des éléments de retenue (30) comprennent des crampons, présentant des pattes d'ancrage (33) situées dans le prolongement du corps (31) associé, chaque crampon étant de préférence formé d'un seul tenant.

8. Armature (20) de jonction (10) selon l'une quelconque des revendications précédentes, **caractérisée en ce que** le corps (31) des éléments de retenue (30) comprend une pièce supérieure (34, 34') et/ou une pièce inférieure (35, 35') reliées ensemble par les organes d'ancrage (40), les pièces inférieure et/ou supérieure (34, 35) du corps (31) des éléments de retenue (30) étant destinées à venir d'un côté ou de l'autre de la première portion d'extrémité (11) de la bande transporteuse (1), suivant son épaisseur (e).

9. Armature (20) de jonction (10) selon la revendication 8, **caractérisée en ce qu'**une première des deux pièces constituées par la pièce supérieure et la pièce inférieure (34, 35) du corps (31) de l'élément de retenue (30) comporte au moins une cuvette (310), telle qu'une fraisure, apte à loger une tête (41) de l'un des organes d'ancrage (40), et **en ce que** la deuxième des deux pièces (34, 35) comporte au moins une interface d'ancrage (311), telle qu'un taraudage, avec laquelle est apte à coopérer un tronçon d'ancrage (42) dudit organe d'ancrage (40).

10. Jonction (10) de bande transporteuse (1) s'étendant suivant un axe longitudinal (X) comprenant un corps (2) en matériau flexible à l'intérieur duquel est logé un renfort (3) comprenant des câbles (4) s'étendant au moins en partie axialement, la bande transporteuse (1) comportant une première (11) et une deuxième (12) portions d'extrémités reliées ensemble par un dispositif de jonction (100) comprenant au moins deux plaques de jonction (101, 102) recouvrant chacune un côté distinct des première et deuxième portions d'extrémités (11, 12) de la bande transporteuse (1) de sorte que les première et deuxième portions d'extrémités (11, 12) de ladite bande transporteuse (1) soient disposées entre les deux plaques de jonction (101, 102), les plaques de jonction (101, 102) étant fixées ensemble par des moyens de fixation (110), la jonction (10) étant **caractérisée en ce qu'**elle comprend au moins une armature (20) de jonction (10) selon l'une quelconque des revendications précédentes rapportée sur la première portion d'extrémité (11) et la deuxième portion d'extrémité (12), et configurée pour retenir les moyens de fixation (110) du dispositif de jonction (100) lorsqu'un effort de traction est réalisé entre le dispositif de jonction (100) et la bande transporteuse (1).

11. Procédé de fabrication d'une jonction (10) de bande transporteuse (1) selon la revendication 10, **caractérisé en ce qu'**il comporte au moins les étapes suivantes :
- Décorticage d'une partie supérieure et d'une partie inférieure du corps (2) de la bande transporteuse au niveau de la première portion d'extrémité (11) et de la deuxième portion d'extrémité (12) de la bande transporteuse (1) ;
- Mise en place d'au moins une armature (20) de jonction (10) rapportée sur la première portion d'extrémité (11) et la deuxième portion d'extrémité (12) de la bande transporteuse (1) ;
- Mise en place du dispositif de jonction (100) de sorte à joindre les première et deuxième portions d'extrémités (11, 12) de la bande transporteuse (1).

## Patentansprüche

1. Armierung (20) für eine Verbindung (10), die dazu bestimmt ist, an mindestens einem ersten Endabschnitt (11) eines Fördergurts (1) der Art angebracht zu werden, die einen Körper (2) aus flexiblem Material aufweist, in dessen Innerem eine Verstärkung (3) aufgenommen ist, die Seile (4) umfasst, wobei die Armierung (20) Halteelemente (30), die mindestens einen Körper (31) besitzen, der dazu ausgebildet ist, sich zumindest teilweise quer zu dem Fördergurt (1) zu erstrecken, und Verankerungsorgane (40) umfasst, die dazu ausgebildet sind, mit zumindest einem Teil der Seile (4) in Eingriff zu kommen, indem sie eine Dicke des ersten Endabschnitts (11) durchqueren, um den Körper (31) der Halteelemente an dem ersten Endabschnitt (11) des Fördergurts (1) zu befestigen, wobei die Halteelemente (30) eine Rückhalteschnittstelle (32) zum Zurückhalten von Befestigungsmitteln (110) einer Verbindungsvorrichtung (100) aufweisen, die dazu bestimmt ist, den ersten Endabschnitt (11) mit einem zweiten Endabschnitt (12) des Fördergurts (1) zu verbinden, wenn der erste und der zweite Endabschnitt (11, 12) zwischen zwei Verbindungsplatten (101, 102) der Verbindungsvorrichtung (100) angeordnet sind, die durch diese Befestigungsmittel (110) aneinander befestigt sind, wobei die Rückhalteschnittstelle (32) dazu ausgebildet ist, die Befestigungsmittel (110) zurückzuhalten, wenn eine Zugkraft zwischen der Verbindungsvorrichtung (100) und dem Fördergurt (1) ausgeübt wird.

2. Armierung (20) für eine Verbindung (10) nach Anspruch 1, **dadurch gekennzeichnet, dass** die Verankerungsorgane (40) jeweils einen Stab umfassen, der dazu ausgebildet ist, den ersten Endabschnitt (11) zu durchqueren.

3. Armierung (20) für eine Verbindung (10) nach Anspruch 1 oder 2, **dadurch gekennzeichnet, dass** die Rückhalteschnittstelle (32) zumindest einiger der Halteelemente (30) von dem Körper (31) dieser Halteelemente (30) getragen wird.

4. Armierung (20) für eine Verbindung (10) nach einem der vorhergehenden Ansprüche, **dadurch gekennzeichnet, dass** mindestens mehrere der Halteelemente (30) entlang einer Achse (Y') miteinander fest verbunden sind, die dazu bestimmt ist, sich quer zu dem Fördergurt (1) zu erstrecken.

5. Armierung (20) für eine Verbindung (10) nach einem der vorhergehenden Ansprüche, **dadurch gekennzeichnet, dass** sie mindestens eine Trägerplatte (21, 22) umfasst, die dazu ausgebildet ist, zumindest einen Teil ein und derselben Seite des ersten Endabschnitts (11) und des zweiten Endabschnitts (12) des Fördergurts (1) zu bedecken, wobei die Trägerplatte (21, 22) mindestens einen Teil mehrerer der Halteelemente (30) aufweist, die in einem vorbestimmten Muster, zum Beispiel versetzt, verteilt sind.

6. Armierung (20) für eine Verbindung (10) nach einem der vorhergehenden Ansprüche, **dadurch gekennzeichnet, dass** der Abstand (d), der zwei Verankerungsorgane (40) eines Halteelements (30) trennt, dazu ausgebildet ist, einem Abstand zu entsprechen, der zwei Seile (4) des ersten Endabschnitts (11) des Fördergurts (1) trennt.

7. Armierung (20) für eine Verbindung (10) nach einem der vorhergehenden Ansprüche, **dadurch gekennzeichnet, dass** zumindest einige der Verankerungsorgane (40) zumindest einiger der Halteelemente (30) Krampen umfassen, die Verankerungslaschen (33) besitzen, die sich in der Verlängerung des zugehörigen Körpers (31) befinden, wobei jede Krampe vorzugsweise einstückig geformt ist.

8. Armierung (20) für eine Verbindung (10) nach einem der vorhergehenden Ansprüche, **dadurch gekennzeichnet, dass** der Körper (31) der Halteelemente (30) ein oberes Bauteil (34, 34') und/oder ein unteres Bauteil (35, 35') umfasst, die durch die Verankerungsorgane (40) miteinander verbunden sind, wobei das untere und/oder das obere Bauteil (34, 35) des Körpers (31) der Halteelemente (30) dazu bestimmt sind, auf der einen oder der anderen Seite des ersten Endabschnitts (11) des Fördergurts (1) in Richtung seiner Dicke (e) zu liegen.

9. Armierung (20) für eine Verbindung (10) nach Anspruch 8, **dadurch gekennzeichnet, dass** ein erstes der beiden durch das obere Bauteil und das untere Bauteil (34, 35) gebildeten Bauteile des Körpers (31) des Halteelements (30) mindestens eine Vertiefung (310), wie etwa eine Senkung, aufweist, die geeignet ist, einen Kopf (41) eines der Verankerungsorgane (40) aufzunehmen, und dass das zweite der beiden Bauteile (34, 35) mindestens eine Verankerungsschnittstelle (311), wie etwa ein Innengewinde, aufweist, mit der ein Verankerungssegment (42) dieses Verankerungsorgans (40) zusammenzuwirken geeignet ist.

10. Verbindung (10) eines Fördergurts (1), der sich entlang einer Längsachse (X) erstreckt und einen Körper (2) aus flexiblem Material umfasst, in dessen Innerem eine Verstärkung (3) aufgenommen ist, die Seile (4) umfasst, die sich zumindest teilweise axial erstrecken, wobei der Fördergurt (1) einen ersten (11) und einen zweiten (12) Endabschnitt aufweist, die durch eine Verbindungsvorrichtung (100) miteinander verbunden sind, die mindestens zwei Verbindungsplatten (101, 102) umfasst, die jeweils eine unterschiedliche Seite des ersten und des zweiten Endabschnitts (11, 12) des Fördergurts (1) bedecken, sodass der erste und der zweite Endabschnitt (11, 12) dieses Fördergurts (1) zwischen den beiden Verbindungsplatten (101, 102) angeordnet sind, wobei die Verbindungsplatten (101, 102) durch Befestigungsmittel (110) aneinander befestigt sind, wobei die Verbindung (10) **dadurch gekennzeichnet ist, dass** sie mindestens eine Armierung (20) für eine Verbindung (10) nach einem der vorhergehenden Ansprüche umfasst, die an dem ersten Endabschnitt (11) und dem zweiten Endabschnitt (12) angebracht ist und dazu ausgebildet ist, die Befestigungsmittel (110) der Verbindungsvorrichtung (100) zurückzuhalten, wenn eine Zugkraft zwischen der Verbindungsvorrichtung (100) und dem Fördergurt (1) ausgeübt wird.

11. Verfahren zur Herstellung einer Verbindung (10) eines Fördergurts (1) nach Anspruch 10, **dadurch gekennzeichnet, dass** es mindestens die folgenden Schritte aufweist:
- Abschälen eines oberen Teils und eines unteren Teils des Körpers (2) des Fördergurts im Bereich des ersten Endabschnitts (11) und des zweiten Endabschnitts (12) des Fördergurts (1);
- Einsetzen mindestens einer Armierung (20) für eine Verbindung (10), die an dem ersten Endabschnitt (11) und dem zweiten Endabschnitt (12) des Fördergurts (1) angebracht wird;
- Einsetzen der Verbindungsvorrichtung (100), um den ersten und den zweiten Endabschnitt (11, 12) des Fördergurts (1) zusammenzufügen.

## Claims

1. Splice (10) frame (20) intended to be attached to at least a first end portion (11) of a conveyor belt (1) of the type comprising a body (2) made of flexible material, inside of which is housed a reinforcement (3) comprising cables (4), the frame (20) comprising retaining members (30) having at least one body (31) configured to extend at least partially transversely with respect to the conveyor belt (1) and anchoring members (40) configured to engage with at least part of the cables (4) through a thickness of the first end portion (11) so as to secure the body (31) of the retaining members to the first end portion (11) of the conveyor belt (1), the retaining members (30) comprising a retention interface (32) for retaining securing means (110) of a splicing device (100) intended for splicing the first end portion (11) with a second end portion (12) of the conveyor belt (1) when the first and second end portions (11, 12) are arranged between two splicing plates (101, 102) of the splicing device (100) secured together by said securing means (110), the retention interface (32) being configured to retain the securing means (110) when a tensile force is applied between the splicing device (100) and the conveyor belt (1).

2. Splice (10) frame (20) according to claim 1, **characterized in that** the anchoring members (40) each comprise a shaft configured to pass through the first end portion (11).

3. Splice (10) frame (20) according to either claim 1 or claim 2, **characterized in that** the retention interface (32) of at least some of the retaining members (30) is supported by the body (31) of said retaining members (30).

4. Splice (10) frame (20) according to any of the preceding claims, **characterized in that** at least a plurality of the retaining members (30) is connected together along an axis (Y') intended to extend transversely with respect to the conveyor belt (1).

5. Splice (10) frame (20) according to any of the preceding claims, **characterized in that** it comprises at least one support plate (21, 22) configured to cover at least part of the side of the first end portion (11) and of the second end portion (12) of the conveyor belt (1), the support plate (21, 22) comprising at least some of a plurality of retaining members (30) arranged in a predetermined, e.g., staggered pattern.

6. Splice (10) frame (20) according to any of the preceding claims, **characterized in that** the distance (d) separating two anchoring members (40) of a retaining member (30) is configured to correspond to a distance separating two cables (4) of the first end portion (11) of the conveyor belt (1).

7. Splice (10) frame (20) according to any of the preceding claims, **characterized in that** at least some of the anchoring members (40) of at least some of the retaining members (30) comprise studs, having anchoring tabs (33) located in the extension of the associated body (31), each stud preferably being formed in one piece.

8. Splice (10) frame (20) according to any of the preceding claims, **characterized in that** the body (31) of the retaining members (30) comprises an upper part (34, 34') and/or a lower part (35, 35') connected together by the anchoring members (40), the lower and/or upper parts (34, 35) of the body (31) of the retaining members (30) being intended to come from one side or the other of the first end portion (11) of the conveyor belt (1), according to the thickness (e) thereof.

9. Splice (10) frame (20) according to claim 8, **characterized in that** a first of the two parts constituted by the upper part and the lower part (34, 35) of the body (31) of the retaining member (30) comprises at least one recess (310), such as a countersink, suitable for receiving a head (41) of one of the anchoring members (40), and **in that** the second of the two parts (34, 35) comprises at least one anchor interface (311), such as a threaded hole, with which an anchoring portion (42) of said anchoring member (40) is suitable for cooperating.

10. Conveyor belt (1) splice (10) extending along a longitudinal axis (X) comprising a body (2) made of flexible material, inside of which is housed a reinforcement (3) comprising cables (4) extending at least partially axially, the conveyor belt (1) comprising a first (11) and a second (12) end portion connected together by a splicing device (100) comprising at least two splicing plates (101, 102) each covering a separate side of the first and second end portions (11, 12) of the conveyor belt (1), such that the first and second end portions (11, 12) of said conveyor belt (1) are arranged between the two splicing plates (101, 102), the splicing plates (101, 102) being secured together by securing means (110), the splice (10) being **characterized in that** it comprises at least one splice (10) frame (20) according to any of the preceding claims attached to the first end portion (11) and the second end portion (12), and configured to retain the securing means (110) of the splicing device (100) when a tensile force is applied between the splicing device (100) and the conveyor belt (1).

11. Method of manufacturing a splice (10) of a conveyor belt (1) according to claim 10, **characterized in that** it comprises at least the following steps:
- Stripping an upper part and a lower part of the body (2) of the conveyor belt at the first end portion (11) and the second end portion (12) of the conveyor belt (1);
- Installing at least one splice (10) frame (20) attached to the first end portion (11) and the second end portion (12) of the conveyor belt (1);
- Installing the splicing device (100) so as to join the first and second end portions (11, 12) of the conveyor belt (1).
